# EUROPÄISCHE PATENTSCHRIFT

(11) **EP 1 486 512 B1**
(45) Veröffentlichungstag und Bekanntmachung des Hinweises auf die Patenterteilung: **03.01.2007**
(21) Anmeldenummer: 04010764.1
(22) Anmeldetag: 06.05.2004
(51) Int. Cl.: C08F 8/12

(54) **Vefahren zur alkalischen Verseifung vernetzter Acrylnitrilperlpolymerisate**
Process for the alkaline saponification of crosslinked pearl polymerisates of acrylonitrile
Procédé de saponification alcaline de perles de polymèrats réticulés d'acylonitrile

(30) Priorität: 19.05.2003 DE 10322441
(43) Veröffentlichungstag der Anmeldung: 15.12.2004
(73) Patentinhaber: LANXESS Deutschland GmbH, 51369 Leverkusen (DE)
(72) Erfinder: Happ, Michael, Dr., 41542 Dormagen (DE); Irmscher, Dieter, 51429 Bergisch Gladbach (DE); Podszun, Wolfgang, Dr., 51061 Köln (DE); Seidel, Rüdiger, Dr., 06792 Sandersdorf (DE); Zarges, Wolfgang, Dr., 51069 Köln (DE)

(56) Entgegenhaltungen:
- EP-A- 0 406 648
- EP-A- 1 110 608
- DE-A- 10 103 028

## Beschreibung

Die vorliegende Erfindung betrifft die alkalische Verseifung vernetzter Acrylnitrilperlpolymerisate, also auf Acrylnitrilbasis hergestellter Perlpolymerisate, sowie die Verwendung derartiger verseifter Acrylnitrilperlpolymerisate als schwachsaure Kationenaustauscher.

Die Herstellung schwachsaurer Kationenaustauscher durch Hydrolyse von vernetzten Acrylnitrilperlpolymerisaten ist bekannt. Bei dieser Reaktion werden die Nitrilgruppen des Polymerisates in Carbonsäuregruppen umgewandelt. Die Hydrolyse kann mit Hilfe von Säuren oder Laugen eingeleitet werden. Die saure Hydrolyse ist wegen der plötzlich auftretenden starken Exothermie reaktionstechnisch schwer zu beherrschen und aus ökologischer Sicht unvorteilhaft, da große Mengen ammoniumsalzhaltige Abfallsäure aufgearbeitet bzw. entsorgt werden müssen. Die alkalische Verseifung hat dagegen den Vorteil, dass die Reaktion über die Dosierung der Lauge und/oder des Polyacrylnitrils leicht zu führen ist und der dabei entstehende Ammoniak einer weiteren oder anderen Verwertung zugeführt werden kann.

In der EP-A 0 406 648 wird die alkalische Verseifung von vernetzten Acrylnitrylperlpolymerisaten ausführlich beschrieben. Dieses Verfahren liefert bei einer gut kontrollierbaren Reaktionsführung schwachsaure Kationenaustauscher. Allerdings weisen die erhaltenen Austauscher eine bräunliche bis gelbe Farbe auf und enthalten einen gewissen Anteil nicht hydrolysierter Nitril- und Amidgruppen. Insbesondere ist der in den nicht hydrolysierten Nitril- und Amidgruppen enthaltene chemisch gebundene Stickstoff unerwünscht, da er bei Gebrauch des Harzes zu einer Abgabe von Ammoniak und/oder Ammoniumionen an das zu reinigende Wasser führen kann. Unter bestimmten anwendungstechnischen Bedingungen, z.B. bei einer starken oxidativen und/oder thermischen Belastung, kann es bei Anwendung der Harze nach EP-A 0 406 648 zu einem gefärbten Ablauf kommen.

Die EP-A 1 110 608 offenbart ein Verfahren zur Herstellung von Ionenaustauschern, bei dem ungesättigte, aliphatische Nitrile mit Di- oder Polyvinylethern als Vernetzer polymerisiert und die erhaltenen Perlpolymerisate zu Ionenaustauschern funktionalisiert werden. Auch in diesem Falle ist die alkalische Verseifung die bevorzugte Funktionalisierungsmethode. Sie liefert intensiv gelb gefärbte Ionenaustauscherperlen.

Während der alkalischen Verseifung von Acrylnitrilpolymeren beobachtet man zu Beginn der Reaktion eine intensiv rot gefärbte Zwischenstufe. Sie entsteht durch eine Cyclisierung benachbarter Nitrilgruppen unter Bildung konjugierter Systeme (Macromol. Chem. Phys. 2000, 201, 2176-2180). Im weiteren Verlauf der Verseifung verschwindet die rote Farbe und es bilden sich bei den gewählten Temperaturen von EP-A 0 406 648 und EP-A 1 110 608 gelb bis bräunlich gefärbte schwach saure Kationenaustauscher.

Die Aufgabe der vorliegenden Erfindung ist die Bereitstellung eines Verfahrens zur alkalischen Verseifung vernetzter acrylhaltiger Perlpolymerisate, sogenannter Acrylnitrilperlpolymerisate, sowie die Verwendung derartiger verseifter Acrylnitrilperlpolymerisate als schwachsaure Kationenaustauscher mit verringerter Farbe und niedrigem Reststickstoffgehalt.

Die vorliegende Aufgabe wird überraschender Weise durch eine besondere Temperaturführung während der alkalischen Verseifung gelöst.

Gegenstand der vorliegenden Erfindung ist ein Verfahren zur Verseifung von vernetzten Acrylnitrilperlpolymerisaten mit einem alkalischen Verseifungsagens, dadurch gekennzeichnet, dass die Verseifung in einem Druckreaktor bei einer Temperatur T1 von 70 bis 120°C begonnen und nach Erreichen eines Verseifungsgrades von mindestens 65 %, bevorzugt mindestens 75 %, bei einer Temperatur T2 von 120 bis 180°C vervollständigt wird, wobei T2 mindestens 10°C höher ist als T1.

Die Verseifung bei T1 kann optisch kontrolliert werden, weil sie sich durch einen Farbumschlag der Lösung von rot nach weiß bzw. farblos ankündigt. Der Farbumschlag und somit Abschluss der ersten Verseifung bei T1 erfolgt dann bei Verseifungsgraden von 65 bis 90 %, bevorzugt bei Verseifungsgraden von 75 bis 80 %.

Erfindungsgemäß ist T2 mindestens 10°C höher als T1, bevorzugt 20 bis 110°C höher als T1, besonders bevorzugt 30 bis 70°C höher als T1.

In einer besonderen Ausführungsform der vorliegenden Erfindung ist das Acrylnitrilperlpolymerisat mit Di- oder Polyvinylether vernetzt.

Die für die Verseifung vorgesehenen vernetzten Acrylnitrilperlpolymerisate sind aus dem Stand der Technik bekannt. Sie lassen sich beispielsweise durch Suspensionspolymerisation unter Verwendung von Dispergiermitteln und Radikalinitiatoren erzeugen. Als Dispergiermittel sind dabei wasserlösliche Cellulosederivate geeignet. Besonders gut bewährt hat sich eine Kombination aus Hydroxyethylcellulose und Kondensationsprodukten von Naphthalinsulfonsäure mit Formaldehyd: Bezugsgröße für Gew.-% bzw. mol-% ist nachfolgend immer die Gesamtmonomermenge. Es werden 0,05 bis 0,5 Gew.-%, bevorzugt 0,1 bis 0,2 Gew.-% Hydroxyethylcellulose und 0,02 bis 0,5 Gew.-%, bevorzugt 0,03 bis 0,1 Gew.-% Kondensationsprodukt aus Naphthalinsulfonsäure und Formaldehyd eingesetzt. Bei der Suspensionspolymerisation ist es zweckmäßig, der wässrigen Phase Alkali- oder Erdalkali-Salze der Halogenwasserstoffsäuren oder Schwefelsäure, insbesondere NaCl, Na₂SO₄ oder CaCl₂, in Mengen von 5 bis 40 Gew.-%, bevorzugt 20 bis 30 Gew.-% zuzusetzen. Die Salze verringern die Löslichkeit der Monomeren in der wässrigen Phase. Zur Verringerung der Agglomeratbildung können pH-Puffer aus Borat oder Phosphat zugesetzt werden. Als Radikalinitiatoren sind für die Herstellung der Acrylnitrilperlpolymerisate Peroxide, Hydroperoxide, Persäureester, Azo-Initiatoren und andere Initiatoren mit Halbwertszeiten t_{1/2} = 1 h zwischen 60 und 140°C geeignet. Beispielhaft seien genannt Peroxyverbindungen wie Dibenzoylperoxid, Dilaurylperoxid, Bis-(p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen wie 2,2'-Azobis(isobutyronitril) oder 2,2'-Azobis(2-methylisobutyronitril). Bevorzugte Inititatoren weisen Halbwertzeiten t_{½} = 1 h zwischen 75 und 110°C auf. Besonders bevorzugt sind Dibenzoylperoxid, tert.-Butyl-peroxy-2-ethylhexanoat und 2,2'-Azobis-(isobutyronitril) in Mengen von 0,05 bis 0,5 Gew.-%, bevorzugt 0,1 bis 0,3 Gew.-%.

Für die Vernetzung erfindungsgemäß geeigneter Acrylnitrilperlpolymerisate kommen bekannte Vernetzter wie Divinylbenzol, Di- und Poly(meth)acrylsäureester von Glycolen, Glycerin, Trimethylolpropan oder Pentaerithrit sowie Octadien-(1,7) oder Trivinylcyclohexan in Frage. Natürlich können auch Vernetzermischungen verwendet werden. Bevorzugte Vernetzer sind Di- und Polyvinylether. Als Polyvinylether seien im vorliegenden Zusammenhang Trivinylether von Glycerin oder Trimethylolpropan oder der Tetravinylether des Pentaerythrits genannt.

Divinylether entsprechen der allgemeinen Formel (I) 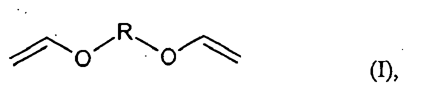 worin
- R: für einen Rest der Reihe CₙH₂ₙ, (CₘH₂ₘ-O)ₚ-CₘH₂ₘ oder CH₂-C₆H₄-CH₂ steht und n ≥ 2, m = 2 bis 8 und p ≥ 1 bedeuten.

Bevorzugte Divinylether sind die Divinylether von Ethylenglycol, Diethylenglycol, Triethylenglycol, Tetraethylenglycol und Butandiol. Besonders bevorzugt sind Butandioldivinylether und Diethylenglycoldivinylether. Die Vernetzer werden in Mengen von 0,2 bis 10 mol-%, bevorzugt 0,5 bis 5 mol-%, besonders bevorzugt 1 bis 2 mol-% pro Gesamtmenge Monomer eingesetzt.

Gegebenenfalls können auch weitere Monovinylverbindungen bei der Herstellung erfmdungsgemäß zu verseifender Acrylnitrilperlpolymerisate eingesetzt werden.

Geeignete Monomere in diesem Zusammenhang sind Styrol und Styrolderivate, Acryl- und Methacrylsäure oder ihre Ester, Amide oder Anhydride, Vinylchlorid, Vinylidenchlorid, Vinylacetat und Vinylpyrrolidon. Sie können in Mengen von 0,5 bis 20 mol-%, bevorzugt 1 bis 5 mol-% eingesetzt werden.

Zur Erhöhung der Porosität der erfindungsgemäß zu verseifenden Acrylnitrilperlpolymerisate können Porogene eingesetzt werden. Als Porogene sind organische Lösungsmittel geeignet, in denen die Monomere löslich sind, die aber das entstandene Polymerisat schlecht lösen bzw. quellen. Beispielhaft seien genannt, Verbindungen der Reihe Ketone, wie Methylisobutylketon, Methylethylketon oder Kohlenwasserstoffe wie Hexan, Octan, Isooctan und Isododecan oder Alkohole wie Butanole, Pentanol, Hexanol und Octanol. Sie können in Mengen von 10 bis 200 Gew.-%, bevorzugt 20 bis 100 Gew.-%, besonders bevorzugt in 40 bis 70 Gew.-% eingesetzt werden.

Die Suspensionspolymerisation zur Herstellung der erfindungsgemäß zu verseifenden Acrylnitrilperlpolymerisate wird vorzugsweise in 2 Stufen ausgeführt. Zunächst wird die Hauptreaktion bei einer Temperatur von 50 bis 80°C durchgeführt und anschließend bei erhöhter Temperatur komplettiert. Besonders bevorzugt wird eine Polymerisation bei 65 bis 75°C mit anschließender Erhöhung der Temperatur auf 85 bis 100°C.

Die erfindungsgemäß zu verseifenden Acrylnitrilperlpolymerisate können vor ihrer Umsetzung, d.h. vor ihrer Verseifung zu schwachsauren Kationenaustauschern beispielsweise durch Sieben fraktioniert werden.

Als alkalisches Verseifungsagens werden wässrige, alkoholische oder wässrig-alkoholische Lösungen von Alkali- und Erdalkalihydroxiden eingesetzt. Bevorzugt werden wässrige Alkalilösungen wie Kalilauge und insbesondere Natronlauge verwendet. Die Konzentration der zu verwendenden Alkalilösung beträgt 10 bis 60 Gew.-%, vorzugsweise 35 bis 55 Gew.-%.

Die Menge an Alkalilösung wird so gewählt, dass ein Alkaliüberschuss von 10 bis 500 mol-%, vorzugsweise 100 bis 300 mol-% bezogen auf die Menge der zu verseifenden Nitrilgruppen eingestellt wird.

In Hinblick auf eine sichere und reproduzierbare Reaktionsführung ist es vorteilhaft, eine der Reaktionskomponenten, das Acrylnitrilperlpolymerisat oder das alkalische Verseifungsagens bei der Temperatur T1 über einen längeren Zeitraum zu dosieren. Die Dosierzeit kann dabei 1 bis 10 h, vorzugsweise 2 bis 6 h betragen.

In einer bevorzugten Ausführungsform der vorliegenden Erfindung wird das alkalische Verseifungsagens in einem Druckreaktor bei der Temperatur T1 zu einer gerührten wässrigen Suspension des Acrylnitrilpolymerisates zudosiert. Die Dosierung des alkalischen Verseifungsagens kann mit konstanter Geschwindigkeit erfolgen. Es hat sich jedoch als besonders günstig erwiesen, die Dosiergeschwindigkeit während der Zugabe zu erhöhen. Auf diese Weise lässt sich eine sehr gleichmäßige Reaktion und Wärmeentwicklung bei hoher Produktivität erreichen.

Die Temperatur T1 beträgt 70 bis 120°C, vorzugsweise 80 bis 110°C, besonders bevorzugt 90 bis 105°C.

Zur Vervollständigung der Verseifung wird die Temperatur des Reaktionsgemisches auf die Temperatur T2 erhöht. T2 beträgt 120 bis 180°C, vorzugsweise 130 bis 170°C, besonders bevorzugt 140 bis 160°C. Die Temperaturerhöhung von T1 auf T2 erfolgt frühestens nach dem Verblassen der roten Farbe, bevorzugt zum Ende der Alkalidosierung. Dabei beträgt der Verseifungsgrad vor der Temperaturerhöhung mindestens 65 %, bevorzugt > 75 % (gemessen als Reststickstoffgehalt des Polymeren).

T2 ist mindestens 10°C, vorzugsweise 20 bis 110°C, besonders bevorzugt 30 bis 70°C höher als T1.

Nach der Verseifung liegen die Acrylnitrilperlpolymerisate als schwachsaure Kationenaustauscher in der Salzform vor und können gegebenenfalls umgeladen und gereinigt werden.

Die Umladung, d.h. die Überführung des Kationenaustauschers in die saure Form erfolgt beispielsweise bei einer Temperatur von 20 bis 100°C mit starken Säuren. Geeignet ist Schwefelsäure mit einer Konzentration von 1 bis 50 Gew.-%, vorzugsweise 2 bis 20 Gew.-%. Zur Reinigung kann das Harz bei erhöhter Temperatur mit Wasser bzw. Dampf behandelt werden. Feinteilige Bestandteile können anschließend in einer Klassiersäule entfernt werden.

Die nach dem erfindungsgemäßen alkalischen Verseifungsverfahren vernetzter Acrylnitrilperlpolymerisate bevorzugt erhaltenen schwachsauren Kationenaustauscher zeigen eine besonders hohe Kapazität, eine sehr geringe Eigenfarbe und einen niedrigen Gehalt an Reststickstoff.

Die vorliegende Erfindung betrifft deshalb auch schwachsaure Kationenaustauscher erhältlich durch Verseifung von vernetzten Acrylnitrilperlpolymerisaten mit einem alkalischen Verseifungsreagens, wobei die Verseifung bei einer Temperatur T1 von 70 bis 120°C, begonnen und nach Erreichen eines Verseifungsgrades von mindestens 65 % bei einer Temperatur T2 von 120 bis 180°C vervollständigt wird und T2 mindestens 10°C höher ist als T1.

Die erfindungsgemäßen schwachsauren, makroporösen Kationenaustauscher können eingesetzt werden u.a. in der Lebensmittelindustrie und zur Trinkwasseraufbereitung. Besonders geeignet sind sie zur Entkationisierung/Enthärtung von Trinkwasser, z.B. in Haushaltsfiltem und zur Entkarboniserung von Trinkwasser sowie Flüssigkeiten, die als Lebensmittel oder bei der Herstellung von Lebensmitteln verwendet werden. Weitere wichtige Anwendungen sind Entkationisierung/Enthärtung von Zuckerlösungen und Lösungen organischer Produkte, z.B. von Rüben-, Rohr- und Stärkezucker, bzw. Glyzerin, Gelatine usw., die Entsalzung von Wässern bei der Herstellung von ultrareinem Wasser, die Entkarbonisierung von Brauchwasser (im Gleichstromverfahren), in der Verbundschaltung mit einem starksauren Kationenaustauscher zur Entsalzung von Wässern für die industrielle Dampferzeugung, als Pufferfilter hinter Entsalzungsanlagen zur Bindung von Alkaliionen, bei der Neutralisation von Regenerierabwässern aus Entsalzungsanlagen, in der Natrium-Form zur Bindung von Schwermetallen, wie Kupfer, Nickel oder Zink, aus Lösungen bei einem pH-Wert >5 in Abwesenheit von Calcium-Ionen und Komplexbildern.

Insbesondere können die erfindungsgemäßen Ionenaustauscher eingesetzt werden
- zur Entfernung von polaren Verbindungen aus wässrigen oder organischen Lösungen
- zur Entfernung von polaren Verbindungen aus Prozess-Strömen der chemischen Industrie
- zur Entfernung von Schwermetallen oder Edelmetallen oder Arsen oder Selen aus wässrigen Lösungen.
Schwermetalle oder Edelmetalle im Sinne der vorliegenden Erfindung sind die Elemente des Periodensystems mit den Ordnungszahlen 22 bis 30, 42 bis 50 sowie 74 bis 83.

Weiterhin können die erfindungsgemäßen Ionenaustauscher und Perlpolymerisate zur Reinigung von Abwasserströmen der chemischen Industrie sowie von Müllverbrennungsanlagen verwendet werden. Eine weitere Anwendung der erfindungsgemäßen Ionenaustauscher stellt die Reinigung von Sickerwässern aus Deponien dar.

### Beispiele

### Beispiel 1 (erfindungsgemäß)

### 1.1. Herstellung eines Acrylnitrilperlpolymerisates

Die Polymerisation erfolgte in einem 3 Liter-Glasplanschliffgefäß mit breitem Planschliffgefäßrührer, Pt 100-Temperaturfühler, Rückflusskühler, 500 ml Tropftrichter und Thermostat mit Steuereinheit.

### Wässrige Phase

| | |
|---|---|
| 1,184 g | Hydroxyethylcellulose in |
| 126 ml | Vollentsalztes Wasser (VE-Wasser) |
| 196,8 g | Natriumchlorid (technisch) in |
| 592 ml | VE-Wasser |
| 0,414 g | Na-Salz von Naphthalinsulfonsäureformaldehyd-Kondensat (95%ig) in |
| 77 ml | VE-Wasser |

### Organische Phase

| | |
|---|---|
| 760 g | Acrylnitril |
| 40 g | Diethylenglykoldivinylether |
| 2,13 g | Dibenzoylperoxid (75%ig) |

Die Hydroxyethylcellulose wird in VE-Wasser (vollentsalztes Wasser) eingestreut und mindestens 8 h bis zum Ansetzen der wässrigen Phase gerührt. Im Polymerisationsgefäß wird die Natriumchlorid-Lösung vorgelegt. Dazu gibt man die Hydroxyethylcellulose-Lösung. Die Sulfonsäure-Lösung wird 15 min gerührt und dann ins Polymerisationsgefäß gegeben. Die komplette wässrige. Phase rührt weitere 30 min.

Die organische Phase wird 15 min bei Raumtemperatur gerührt und dann bei stehendem Rührer zur wässrigen Phase gegeben. Anschließend steht der Ansatz ohne Rühren 20 min. Danach wird 20 min bei 170 rpm (Umdrehungen pro Minute) bei Raumtemperatur gerührt.

Unter Rühren wird innerhalb von 90 min auf 72°C erwärmt. Das Anspringen der Reaktion ist durch eine Änderung der Farbe (trüb nach milchig-weiß) zu erkennen. Die entstehende Reaktionswärme wird über den Außenmantel des Glasgefäßes, der mit dem Thermostaten verbunden ist, abgeführt. Reaktionsspitzen werden durch portionsweise Zugabe von kaltem Wasser abgefangen. Die gesamte Reaktionszeit bei 72°C beträgt 5 h. Anschließend wird innerhalb 1 h auf 90°C erwärmt und 5 h bei dieser Temperatur gehalten. Anschließend kühlt man den Ansatz ab und überführt ihn in eine Säule und reinigt das Harz mit 1 Bettvolumen Dampf. Danach wird das Harz auf einem 100 mesh-Sieb mit VE-Wasser ausgewaschen.

Ausbeute: 1180 ml Harz, Trockenausbeute: 93,2 %.
N-Gehalt des Polymeren: 25,0 %

### 1.2. Alkalische Verseifung

500 ml des Harzes aus Beispiel 1.1 werden wie im folgendem beschrieben in einem 3 Liter-V4A-Autoklav mit Rührer und Temperaturregelung verseift.

| | |
|---|---|
| 500 ml | Harz (nutschfeucht) |
| 727 ml | VE-Wasser |
| 143 ml | NaOH 45%ig (1. Teil) |
| 655 ml | NaOH 45%ig (2. Teil) |
| 150 ml | VE-Wasser |
| 670 ml | VE-Wasser |

Harz und Wasser werden im Autoklaven vorgelegt und auf 100°C erwärmt. Innerhalb von 120 min wird der 1. Teil der NaOH zugepumpt. Anschließend wird in 100 min der 2. Teil der NaOH zugegeben und danach zügig 150 ml Wasser. Während der NaOH-Zugabe werden Harzproben gezogen, mit 6 %iger Schwefelsäure angesäuert, neutral gewaschen, die Farbe ermittelt, getrocknet und der Stickstoffgehalt bestimmt. Dann erwärmt man in 1 h auf 150°C und rührt 2,5 h nach. Während des Zupumpens der Natronlauge wird drucklos gefahren und anschließend der Druck auf max. 4,5 bar gehalten. Entstehender Ammoniak wird über eine Glasvorlage, in der sich Wasser befindet, entspannt. Nach beendetem Nachrühren wird der Ansatz auf 100°C abgekühlt und dann in 40 min entspannt. Bei offenem Ventil werden 670 ml Wasser zugepumpt. Zum Schluss wird der Ansatz noch 1 h bei 100°C und offenem Ventil nachgerührt. Nach dem Abkühlen auf Raumtemperatur wird das Harz entnommen und auf dem Sieb ausgewaschen.

### 1.3. Beurteilung der Proben

| **Zeit (min)** | **NaOH (ml)** | **N-Gehalt (%)** | **Verseifungsgrad (%)** | **Aussehen der Perlen** |
|---|---|---|---|---|
| 60 | 71 | 19,5 | 22 | dunkelrot |
| 120 | 143 | 12,8 | 49 | orangerot |
| 180 | 536 | 8,2 | 67 | hellgelb |
| 220 | 679 | 5,0 | 80 | weiß |

### 1.4. Überführung in die H-Form

Danach wird das Harz in eine Säule gefüllt. Die Umwandlung in die H-Form erfolgt mit 6 %iger. H₂SO₄ bis zum deutlich sauren Ablauf. Anschließend wird das Harz mit Wasser neutral gewaschen.
Volumen H-Form: 1090 ml.

### 1.5. Eigenschaften des Kationenaustauschers

Totalkapazität: 4,80 eq/l
Stickstoffgehalt: 0,22 %
Farbwerte des Harzes: L* = 80, b* = 8
310 nm Extinktion des Eluats: 0,04

### 1.6. Prüfmethoden

### Totalkapazität:

Die Bestimmung erfolgt nach DIN 54403, Verfahren B (schwach saure Kationenaustauscher).

### Stickstoffgehalt: Elementaranalyse

### Farbwerte des Harzes:

L* (weiß/schwarz), b* (gelb/blau) und a* (rot/grün) stellen die Koordinaten im CIE-LAB-System dar. Zur Beurteilung der Farbe des Harzes werden die Farbwerte L* und b* des CIE-LAB-Systems verwendet. Auf der L*-Achse bedeutet 100 weiß und 0 schwarz. Positive b*-Werte besitzen gelb gefärbte Stoffe. Günstig sind hohe L*-Werte und niedrige positive b*-Werte.

Die Messung erfolgt in einem Farbmessgerät Micro Color II der Firma Dr. Lange nach DIN 6174 (Farbmetrische Bestimmung von Farbabständen nach dem CIE-LAB-System). Dazu wird die Küvette mit dem Harz gefüllt und dieses mit Wasser bedeckt. Die Kalibrierung des Farbmessgerätes erfolgt mit einem Weißstandard.
310 nm Extinktion des Eluats:
50 ml Harz werden mit 150 ml VE-Wasser versetzt und in einer Glasflasche 16 h bei 60°C erwärmt. Die Extinktion des Eluats wird bei 310 nm in einer 1 cm-Quarzküvette mit einem Spektrometer UV-VIS Specord 200 der Firma Analytikjena AG gemessen.

### Beispiel 2 (Vergleichsbeispiel)

### 2.1. Herstellung eines Acrylnitrilperlpolymerisates

Das Beispiel 1.1 wurde wiederholt.

### 2.2. Alkalische Verseifung

500 ml des Harzes aus Beispiel 1.1 werden wie im folgendem beschrieben in einem 3 Liter-V4A-Autoklav mit Rührer und Temperaturregelung verseift.

| | |
|---|---|
| 500 ml | Harz (nutschfeucht) |
| 727 ml | VE-Wasser |
| 143 ml | NaOH 45%ig (1. Teil) |
| 655 ml | NaOH 45%ig (2. Teil) |
| 150 ml | VE-Wasser |
| 670 ml | VE-Wasser |

Harz und Wasser werden im Autoklaven vorgelegt und auf 150°C erwärmt. Innerhalb von 120 min wird der 1. Teil der NaOH zügepumpt. Anschließend wird in 100 min der 2. Teil der NaOH zugegeben und danach zügig 150 ml Wasser. Bei 150°C wird 3,5 h nachgerührt. Während des Zupumpens und der Nachrührzeit wird der Druck auf max. 4,5 bar gehalten. Entstehender Ammoniak wird über eine Glasvorlage, in der sich Wasser befindet, entspannt. Nach beendetem Nachrühren wird der Ansatz auf 100°C abgekühlt und dann in 40 min entspannt. Bei offenem Ventil werden 670 ml Wasser zugepumpt. Zum Schluss wird der Ansatz noch 1 h bei 100°C und offenem Ventil nachgerührt. Nach dem Abkühlen auf Raumtemperatur wird das Harz entnommen und auf dem Sieb ausgewaschen.

### 2.3. Überführung in die H-Form

Danach wird das Harz in eine Säule überführt. Die Umwandlung in die H-Form erfolgt mit 6 %iger H₂SO₄ bis zum deutlich sauren Ablauf. Anschließend wird das Harz mit Wasser neutral gewaschen.
Volumen H-Form: 1090 ml.

### 2.4. Eigenschaften des Kationenaustauschers

Totalkapazität: 4,76 eq/l
Stickstoffgehalt: 0,20 %
Farbwerte des Harzes: L* = 72, b* = 45
310 nm Extinktion des Ablaufes: 0,22.

## Patentansprüche

1. Verfahren zur Verseifung von vernetzten Acrylnitrilperlpolymerisaten mit einem alkalischen Verseifungsagens, **dadurch gekennzeichnet, dass** die Verseifung in einem Druckreaktor bei einer Temperatur T1 von 70 bis 120°C begonnen und nach Erreichen eines Verseifungsgrades von mindestens 65 % bei einer Temperatur T2 von 120 bis 180°C vervollständigt wird, wobei T2 mindestens 10°C höher ist als T1.

2. Verfahren gemäß Anspruch 1, **dadurch gekennzeichnet, dass** das alkalische Verseifungsagens bei der Temperatur T1 zu einer wässrigen Suspension des Acrylnitrilpolymerisates zudosiert wird.

3. Verfahren gemäß der Ansprüche 1 und 2, **dadurch gekennzeichnet, dass** das Acrylnitrilperlpolymerisat mit Divinylether oder Polyvinylether vernetzt ist.

4. Verfahren gemäß Anspruch 3, **dadurch gekennzeichnet, dass** als Divinylether Verbindungen der allgemeinen Formel (I) 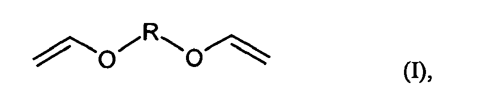 worin
R für einen Rest der Reihe CₙH₂ₙ, (CₘH₂ₘ-O)ₚ-CₘH₂ₘ oder CH₂-C₆H₄-CH₂ steht und n ≥ 2, m = 2 bis 8 und p ≥ 1 stehen
eingesetzt werden.

5. Verwendung der alkalisch verseiften Acrylnitrilperlpolymerisate hergestellt nach den Ansprüchen 1 bis 4 als schwachsaure Kationenaustauscher.

6. Schwachsaure Kationenaustauscher erhältlich durch Verseifung von vernetzten Acrylnitrilperlpolymerisaten mit einem alkalischen Verseifungsagens, wobei die Verseifung bei einer Temperatur T1 von 70 bis 120°C begonnen und nach Erreichen eines Verseifungsgrades von mindestens 65 % bei einer Temperatur T2 von 120 bis 180°C vervollständigt wird und T2 mindestens 10°C höher ist als T1.

7. Verwendung der schwachsauren Kationenaustauscher gemäß Anspruch 7 zur Aufbereitung von Trinkwasser oder Grundwässem, sowie zur Entfernung von polaren oder unpolaren Verbindungen oder Schwer- oder Edelmetallen oder Arsen oder Selen aus wässrigen oder organischen Lösungen der chemischen Industrie, Elektroindustrie, Lebensmittelindustrie, Abfallentsorgungs- und Abfallverwertungsindustrie.

## Claims

1. Process for saponifying crosslinked acrylonitrile bead polymers, using an alkaline saponifier, **characterized in that** the saponification is begun in a pressure reactor at a temperature T1 of from 70 to 120°C and, once a degree of saponification of at least 65% has been reached, is completed at a temperature T2 of from 120 to 180°C, T2 being higher than T1 by at least 10°C.

2. Process according to Claim 1, **characterized in that** the alkaline saponifier is fed at the temperature T1 into an aqueous suspension of the acrylonitrile polymer.

3. Process according to Claims 1 and 2, **characterized in that** the acrylonitrile bead polymer has been crosslinked using divinyl ether or using polyvinyl ether.

4. Process according to Claim 3, **characterized in that** the divinyl ethers used comprise compounds of the general formula (I) 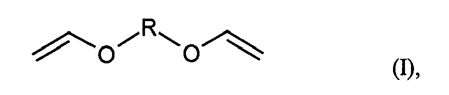 where
R are a radical of the group CₙH₂ₙ, (CₘH₂ₘ-O)ₚ-CₘH₂ₘ, or CH₂-C₆H₄-CH₂, and n ≥2, m = from 2 to 8, and p ≥1.

5. Use of the acrylonitrile bead polymers which have undergone alkaline saponification, having been prepared according to Claims 1 to 4, as weakly acidic cation exchangers.

6. Weakly acidic cation exchanger obtainable via saponification of crosslinked acrylonitrile bead polymers, using an alkaline saponifier, where the saponification is begun at a temperature T1 of from 70 to 120°C and, once a degree of saponification of at least 65% has been achieved, the saponification is completed at a temperature T2 of from 120 to 180°C, and T2 is higher by at least 10°C than T1.

7. Use of the weakly acidic cation exchangers according to claim 7 for treating drinking water or ground water, or else for removing polar or non-polar compounds or heavy or precious metals, or arsenic or selenium, from aqueous or organic solutions in the chemical industry, electrical industry, food and drink industry, waste disposal industry, or waste recycling industry.

## Revendications

1. Procédé pour la saponification de polymérisats en perles d'acrylonitrile réticulés, à l'aide d'un agent alcalin de saponification, **caractérisé en ce que** la saponification est commencée dans un réacteur tenant la pression, à une température T1 de 70 à 120 °C et, une fois atteint un degré de saponification d'au moins 65 %, est achevée à une température T2 de 120 à 180 °C, T2 étant supérieure d'au moins 10 °C à T1.

2. Procédé selon la revendication 1, **caractérisé en ce que** l'agent alcalin de saponification est ajouté par addition dosée, à la température T1, à une suspension aqueuse du polymérisat d'acrylonitrile.

3. Procédé selon les revendications 1 et 2, **caractérisé en ce que** le polymérisat en perles d'acrylonitrile est réticulé avec de l'éther divinylique ou de l'éther polyvinylique.

4. Procédé selon la revendication 3, **caractérisé en ce qu'**on utilise comme éther divinylique des composés de formule générale (I) 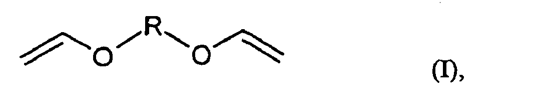 dans laquelle
R représente un radical de la série CₙH₂ₙ, (CₘH₂ₘ-O)ₚ-CₘH₂ₘ ou CH₂-C₆H₄-CH₂ et n est ≥ 2, m va de 2 à 8 et p est ≥ 1.

5. Utilisation des polymérisats en perles d'acrylonitrile préparés selon les revendications 1 à 4, en tant qu'échangeurs de cations faiblement acides.

6. Echangeur de cations faiblement acide pouvant être obtenu par saponification de polymérisats en perles d'acrylonitrile réticulés, à l'aide d'un agent alcalin de saponification, la saponification étant commencée à une température T1 de 70 à 120 °C et, une fois atteint un degré de saponification d'au moins 65 %-, étant achevée à une température T2 de 120 à 180 °C, T2 étant supérieure d'au moins 10 °C à T1.

7. utilisation des échangeurs de cations faiblement acides selon la revendication 6, pour le traitement d'eau potable ou d'eaux souterraines, ainsi que pour l'élimination de composés polaires ou non polaires ou de métaux lourds ou précieux ou d'arsenic ou de sélénium de solutions aqueuses ou organiques de l'industrie chimique, de l'industrie électrique, de l'industrie alimentaire, de l'industrie d'élimination des déchets et de récupération des déchets.
